# EUROPÄISCHE PATENTANMELDUNG

(11) **EP 4 541 524 A1**
(43) Veröffentlichungstag der Anmeldung: **23.04.2025**
(21) Anmeldenummer: 24199825.1
(22) Anmeldetag: 11.09.2024
(51) Int. Cl.: B25J 15/04, B25J 19/00

(54) **VERFAHREN ZUM HANDHABEN EINES GREIFOBJEKTS MITTELS EINER HANDHABUNGSANLAGE SOWIE HANDHABUNGSANLAGE**

(30) Priorität: 20.10.2023 DE 102023128962
(71) Anmelder: J. Schmalz GmbH, 72293 Glatten (DE)
(72) Erfinder: Schaaf, Walter, 72250 Freudenstadt-Grüntal (DE); Frey, Matthias, 72172 Sulz-Dürrenmettstetten (DE); Krieg, Steffen, 71111 Waldenbuch (DE); Eberhardt, Tobias, 72293 Glatten (DE)
(74) Vertreter: DREISS Patentanwälte PartG mbB

(57) **Zusammenfassung**

Die Erfindung betrifft ein Verfahren zum Handhaben eines Greifobjekts (14) mittels einer Handhabungsanlage (10) umfassend einen Endeffektor (12), einen Manipulator (16) und eine Kopplungseinrichtung (18) zum An- und Abkoppeln des Endeffektors an den Manipulator, das Verfahren umfassend das Greifen des Greifobjekts mittels des Endeffektors, das Ablegen des Greifobjekts an einem Ablageort und das Aufnehmen des Greifobjekts von einem Aufnahmeort, wobei zum Ablegen des Greifobjekts der Endeffektor von dem Manipulator abgekoppelt wird, sodass der Endeffektor an dem Greifobjekt verbleibt, und wobei das Aufnehmen des Greifobjekts von dem Aufnahmeort das Ankoppeln des an dem Greifobjekt verbliebenen Endeffektors an den Manipulator umfasst. Die Erfindung betrifft auch eine Handhabungsanlage.

## Beschreibung

Die Erfindung betrifft ein Verfahren zum Handhaben eines Greifobjekts mittels einer Handhabungsanlage umfassend einen Endeffektor zum Greifen des Greifobjekts und einen Manipulator zum Verlagern des Endeffektors. Die Erfindung betrifft auch eine solche Handhabungsanlage.

Handhabungsanlagen sind aus dem Stand der Technik in vielfältiger Art und Weise bekannt und finden beispielsweise in Produktionsumgebungen Verwendung, um Werkstücke zwischen zwei Lagerorten oder einem Lagerort und einer Bearbeitungsmaschine zu transportieren. Derartige Handhabungsvorgänge umfassen üblicherweise das Greifen des Werkstücks (bspw. aus einem Lagerort), das Ablegen des Werkstücks (bspw. an einem anderen Lagerort oder an einer Bearbeitungsstation einer Bearbeitungsmaschine) und das anschließende erneute Wiederaufnehmen des Werkstücks (bspw. um es aus dem Lagerort einem Verpackungsprozess zuzuführen oder nach erfolgter Bearbeitung in der Bearbeitungsmaschine einem Lagerort zuzuführen).

Bei dem erneuten Aufnehmen des Werkstücks besteht oftmals das Problem, dass das Werkstück nicht mehr an der exakt gleichen Position gegriffen wird, was in bestimmten Anwendungssituationen zu Problemen führen kann, bspw. dann, wenn das Werkstück mehrere aufeinanderfolgende Bearbeitungsprozesse durchlaufen soll.

Um diesem Problem zu begegnen, wurde vorgeschlagen, das Werkstück in eine zentrierende Vorrichtung abzulegen oder mit optischer Sensorik eine Kontur oder Geometrie des Werkstücks zu erfassen, um somit ein positionsgenaues Wiederaufnehmen des Werkstücks zu ermöglichen. Alternativ ist es auch bekannt, das Werkstück während eines Bearbeitungsprozesses mittels des Manipulators und des Endeffektors zu halten und den Manipulator einer Bewegung des Werkstücks während der Bearbeitung nachzuführen.

Die bekannten Lösungen sind jedoch entweder wenig flexibel oder erfordern eine aufwändige Steuerung und Überwachung durch kosten- und wartungsintensive Sensorik.

Die Erfindung beschäftigt sich mit der Aufgabe, Greifobjekts auf einfache und kostengünstige Weise positionsgenau wieder aufzunehmen.

Diese Aufgabe wird erfindungsgemäß durch ein Verfahren mit den Merkmalen des Anspruchs 1 gelöst. Hierbei handelt es sich um ein Verfahren zum Handhaben eines Greifobjekts mittels einer Handhabungsanlage. Das Verfahren ist insofern auch ein Verfahren zum Betreiben einer Handhabungsanlage.

Die Handhabungsanlage umfasst einen Endeffektor zum Greifen des Greifobjekts. Insbesondere umfasst der Endeffektor eine Greifvorrichtung zum Greifen eines Greifobjekts. Die Handhabungsanlage umfasst außerdem einen Manipulator, insbesondere Roboter, zum Verlagern des Endeffektors. Der Manipulator kann unterschiedlich ausgebildet sein. Der Manipulator kann als Ein- oder Mehrachssystem ausgebildet sein. Vorzugsweise ist der Manipulator als Roboter ausgebildet. Die Handhabungsanlage umfasst außerdem eine Kopplungseinrichtung zum wiederholten, insbesondere automatisierten, An- und Abkoppeln des Endeffektors an den Manipulator. Die Kopplungseinrichtung ist insofern insbesondere dazu eingerichtet, um den Endeffektor wiederholbar an den Manipulator anzukoppeln, abzukoppeln und wieder anzukoppeln. Mit anderen Worten ist der Endeffektor über eine Kopplungseinrichtung, insbesondere automatisiert, wiederholbar an den Manipulator ankoppelbar, von dem Manipulator abkoppelbar und wieder an den Manipulator ankoppelbar.

Gemäß dem Verfahren wird das Greifobjekt zunächst mittels des Endeffektors gegriffen. Hierbei ist der Endeffektor insbesondere an den Manipulator angekoppelt. Insbesondere kann der Endeffektor zum Greifen des Greifobjekts von dem Manipulator auf das Greifobjekt abgesetzt werden und danach eine Greifwirkung des Endeffektors aktiviert werden.

Nach dem Greifen des Greifobjekts wird der Endeffektor und das damit gegriffene Greifobjekt mittels des Manipulators zu einem Ablageort verlagert. Bei dem Ablageort kann es sich beispielsweise um eine Bearbeitungsstation einer Bearbeitungsanlage oder einen Lagerort für das Greifobjekt handeln. Sodann wird das Greifobjekt an dem Ablageort abgelegt. Hierzu wird erfindungsgemäß der Endeffektor mittels der Kopplungseinrichtung von dem Manipulator abgekoppelt, sodass der Endeffektor an dem Greifobjekt verbleibt. Gemäß dem Verfahren werden insofern Greifobjekt und Endeffektor gemeinsam an dem Ablageort abgelegt. Mit anderen Worten, das Ablegen des Greifobjekts an dem Ablageort umfasst das Abkoppeln des Endeffektors von dem Manipulator mittels der Kopplungseinrichtung derart, dass der Endeffektor an dem Greifobjekt verbleibt. Insbesondere findet beim Ablegen des Greifobjektes keine Relativbewegung zwischen Endeffektor und Greifobjekt statt.

In einem weiteren Schritt wird das Greifobjekt mittels des Manipulators von einem Aufnahmeort aufgenommen. Hierzu wird erfindungsgemäß der an dem Greifobjekt verbliebene Endeffektor erneut mittels der Kopplungseinrichtung an den Manipulator angekoppelt. Das Aufnehmen des Greifobjekts von dem Aufnahmeort umfasst insofern das Ankoppeln des an dem Greifobjekt verbliebenen Endeffektors an den Manipulator mittels der Kopplungseinrichtung. Insbesondere umfasst das Aufnehmen des Greifobjekts also nicht das erneute Greifen des Greifobjekts mittels des Endeffektors.

Bei dem vorgeschlagenen Verfahren werden insofern Greifobjekt und Endeffektor gemeinsam abgelegt und wieder gemeinsam aufgenommen. Insofern verbleibt der Endeffektor in definierter Position an dem Greifobjekt, beispielsweise während das Greifobjekt an einem Lagerort zwischengelagert ist oder während das Greifobjekt einem Bearbeitungsprozess unterzogen wird. Auf diese Weise wird das vorstehend genannte Problem, das Greifobjekt an der gleichen Position und insbesondere in gleicher Orientierung wieder aufzugreifen, auf konstruktiv einfache und zuverlässige Weise gelöst. Dadurch, dass der Endeffektor beim Ablegen des Greifobjekts von dem Manipulator abgekoppelt wird, kann der Manipulator - während das Greifobjekt abgelegt ist oder bearbeitet wird - für weitere Aufgaben eingesetzt werden, was eine Gesamteffizienz der Handhabungsanlage erhöht.

Bei dem Greifobjekt kann es sich insbesondere um ein Werkstück handeln.

Die Kopplungseinrichtung kann insbesondere zum werkzeugfreien An- und Abkoppeln des Endeffektors ausgebildet sein. Die Kupplungseinrichtung kann als Schnellkupplung ausgebildet sein. Bei einer Ausgestaltung des Manipulators als Roboter kann die Kopplungseinrichtung insbesondere einen Roboterflansch umfassen.

Der Aufnahmeort kann dem Ablageort entsprechen (bspw. ein Lagerort in einem Greifobjekt-Zwischenlager). Der Aufnahmeort kann auch von dem Ablageort verschieden sein. Beispielsweise kann der Ablageort ein Zufuhrort einer Bearbeitungsmaschine sein und der Aufnahmeort kann ein Ausgabeort der Bearbeitungsmaschine sein.

Zwischen dem Ablegen des Greifobjekts und dem Aufnehmen des Greifobjekts kann ein Arbeitsprozess mit dem Greifobjekt oder ein Bearbeitungsprozess an dem Greifobjekt durchgeführt werden. Insofern kann das Verfahren zwischen dem Ablegen des Greifobjekts an dem Ablageort und dem Aufnehmen des Greifobjekts von einem Aufnahmeort das Durchführen eines Arbeitsprozesses mit dem Greifobjekt oder das Durchführen eines Bearbeitungsprozesses an dem Greifobjekt umfassen. Das Durchführen des Arbeitsprozesses oder Bearbeitungsprozesses kann das Überführen des Greifobjektes von dem Ablageort zu einem von dem Ablageort verschiedenen Aufnahmeort umfassen.

Es ist denkbar, dass der Endeffektor nach dem Abkoppeln (also nach dem Ablegen des Greifobjekts) lediglich auf dem Greifobjekt aufliegt. Insofern ist es denkbar, dass zumindest für ein Zeitintervall zwischen dem Ablegen des Greifobjekts (Abkoppeln des Endeffektors von dem Manipulator) und dem Aufnehmen des Greifobjekts (Ankoppeln des Endeffektors an den Manipulator) das Greifobjekt von dem Endeffektor nicht aktiv gegriffen wird. Eine solche Ausgestaltung ist energiesparend und kann insbesondere dann vorteilhaft sein, wenn das Greifobjekt zwischen Ablegen und Aufnehmen nicht oder nur geringfügig verschoben wird (bspw. in einem Lager).

Vorzugsweise bleibt aber eine Greifwirkung des Endeffektors auf das Greifobjekt auch zwischen dem Ablegen des Greifobjektes und dem Aufnehmen des Greifobjekts, insbesondere für die gesamte Dauer, aufrechterhalten. Das Greifobjekt wird also vorzugsweise auch im abgekoppelten Zustand des Endeffektors von dem Endeffektor gegriffen. Auf diese Weise sind Greifobjekt und Endeffektor relativ zueinander fixiert, was das Risiko eines unerwünschten Ablösens des Endeffektors von dem Greifobjekt, bspw. im Zuge einer Verlagerung des Greifobjekts oder einer Krafteinwirkung auf das Greifobjekt während eines Bearbeitungsprozesses, reduziert.

Im vorliegenden Zusammenhang meint "angekoppelter Zustand", dass der Endeffektor mittels der Kopplungseinrichtung an dem Manipulator angekoppelt ist. Im vorliegenden Zusammenhang meint "abgekoppelter Zustand", dass der Endeffektor von dem Manipulator abgekoppelt ist, die Kopplungseinrichtung also insbesondere gelöst ist.

Der Endeffektor kann unterschiedlich ausgebildet sein. Der Endeffektor kann eine magnetische Greifvorrichtung, insbesondere Magnetgreifer, umfassen. Der Endeffektor kann eine mechanische Greifvorrichtung, insbesondere Fingergreifer oder Klemme, umfassen. Der Endeffektor kann einen Adhäsionsgreifer, insbesondere Gecko-Greifer, umfassen. Der Endeffektor kann auch einen Passivgreifer umfassen. Der Endeffektor kann eine Unterdruckgreifvorrichtung, insbesondere Sauggreifer, weiter insbesondere Flächensauggreifer, umfassen. Der Endeffektor kann mehrere Greifvorrichtungen umfassen. Der Endeffektor kann Kombinationen der beschriebenen Greifvorrichtungen umfassen.

Es ist denkbar, dass eine Greifwirkung des Endeffektors auch im abgekoppelten Zustand passiv aufrechterhalten bleiben, bspw. bei einer Ausgestaltung des Endeffektors als Magnetgreifer mit Permanentmagnet oder als mechanischer Greifer. Es ist aber auch denkbar, dass das Aufrechterhalten einer Greifwirkung im abgekoppelten Zustand eine Energiezufuhr zu dem Endeffektor erfordert, bspw. bei einer Ausgestaltung des Endeffektors als Magnetgreifer mit Elektromagnet (elektrische Energie) oder als Unterdruckgreifer (Betriebsenergie in Form von Unterdruck, Überdruck oder elektrischer Energie).

Der Endeffektor kann sowohl im angekoppelten Zustand als auch im abgekoppelten Zustand über eine primäre Energieversorgung mit Betriebsenergie versorgt werden. Mit Betriebsenergie ist vorliegend eine zum Greifen eines Greifobjekts erforderliche Energieversorgung des Endeffektors gemeint. Im vorliegenden Zusammenhang kann der Begriff "Betriebsenergie" insbesondere sowohl elektrische Energie als auch Energie in Form von Druckluft oder Unterdruck umfassen.

Im Rahmen einer vorteilhaften Weiterbildung kann der Endeffektor im angekoppelten Zustand mit einer Versorgungsleitung zur Versorgung des Endeffektors mit Betriebsenergie verbunden sein, wobei die Versorgungsleitung im abgekoppelten Zustand des Endeffektors (insbesondere zwischen dem Ablegen des Greifobjekts und dem Aufnehmen des Greifobjekts), insbesondere dauerhaft, mit dem Endeffektor verbunden bleibt. Eine solche Ausgestaltung ermöglicht es auf konstruktiv einfache und kostengünstige Art und Weise den Endeffektor auch im abgekoppelten Zustand mit Betriebsenergie (bspw. Strom oder Unterdruck/Überdruck) zu versorgen. Die Versorgungsleitung kann eine elektrische Leitung und/oder eine fluidische Leitung, insbesondere Unterdruckleitung oder Überdruckleitung, umfassen. Die Versorgungsleitung kann Teil der Handhabungsanlage sein. Insofern kann die Handhabungsanlage eine mit dem Endeffektor verbundene Versorgungsleitung zur Versorgung des Endeffektors mit Betriebsenergie umfassen. Die Versorgungsleitung kann von dem Manipulator bewegungsgetrennt sein.

Im Rahmen einer alternativen Ausgestaltung kann der Endeffektor im angekoppelten Zustand über eine primäre Energieversorgung (bspw. Stromversorgung, Unterdruckversorgung und/oder Überdruckversorgung) mit Betriebsenergie versorgt werden, und im abgekoppelten Zustand über eine sekundäre, insbesondere autarke, Hilfsenergieversorgung mit Betriebsenergie versorgt werden. Die Hilfsenergieversorgung ist insbesondere zum autarken Betreiben des Endeffektors ausgebildet. Die Hilfsenergieversorgung kann insbesondere durch eine an dem Endeffektor angeordnete Hilfsenergieversorgungseinrichtung bereitgestellt sein. Eine solche Ausgestaltung ermöglicht es, den Endeffektor autark zu betreiben, sodass eine Greifwirkung auch bei längeren Abkoppelphasen aufrechterhalten bleiben kann.

Im Rahmen einer vorteilhaften Ausgestaltung kann der Endeffektor einen Energiespeicher zum autarken Betreiben des Endeffektors umfassen. Der Energiespeicher ist insbesondere zur Versorgung des Endeffektors mit Betriebsenergie, insbesondere in Form von elektrischer Energie oder Druckluft, ausgebildet. Der Energiespeicher kann ein Stromspeicher (z.B. Batterie oder Kondensator) sein. Der Energiespeicher kann ein Druckspeicher (z.B. Unterdruckspeicher oder Überdruckspeicher) sein. Der Energiespeicher kann zur Speicherung mechanischer Energie ausgebildet sein (z.B. Feder). Der Energiespeicher kann Teil einer vorstehend beschriebenen Hilfsenergieversorgungseinrichtung sein.

Im Rahmen einer besonders bevorzugten Ausgestaltung umfasst der Endeffektor eine Unterdruckgreifvorrichtung zum Greifen des Greifobjekts mittels Unterdruck oder ist als Unterdruckgreifvorrichtung ausgebildet. Insbesondere umfasst der Endeffektor einen Sauggreifer zum Ansaugen eines Greifobjekts.

Im Rahmen einer vorteilhaften Weiterbildung kann die Unterdruckgreifvorrichtung des Endeffektors im angekoppelten Zustand von einer primären Unterdruckversorgung mit Unterdruck versorgt werden und im abgekoppelten Zustand (also nach dem Abkoppeln des Endeffektors von dem Manipulator, insbesondere nach dem Ablegen des Greifobjekts) von einer sekundären Hilfsunterdruckversorgung mit Unterdruck versorgt werden. Der Endeffektor kann im angekoppelten Zustand zusätzlich zur primären Unterdruckversorgung über die Hilfsunterdruckversorgung mit Unterdruck versorgt werden.

Insbesondere kann der Endeffektor eine sekundäre Hilfsunterdruckversorgungseinrichtung umfassen, welche insbesondere zur autarken Erzeugung und/oder Bereitstellung von Hilfsunterdruck ausgebildet ist. Die Hilfsunterdruckversorgungseinrichtung kann nur im abgekoppelten Zustand aktiviert sein. Die Hilfsunterdruckversorgungseinrichtung kann auch im angekoppelten Zustand - zusätzlich zu der primären Unterdruckversorgung - aktiviert sein.

Im Rahmen einer vorteilhaften Weiterbildung kann die Hilfsunterdruckversorgungseinrichtung eine Unterdruckerzeugungseinrichtung umfassen. Dabei kann es sich beispielsweise um einen pneumatischen Ejektor, eine elektrische Pumpe oder einen Unterdruckspeicher mit einer Pumpe handeln. In vorteilhafter Weise kann die Hilfsunterdruckversorgungseinrichtung einen Energiespeicher zum Betreiben der Unterdruckerzeugungseinrichtung aufweisen. Hierbei kann es sich beispielsweise um einen Druckluftspeicher (bspw. zum Betreiben eines pneumatischen Ejektors) oder eine Batterie (bspw. zum Betreiben einer elektrischen Unterdruckerzeugungseinrichtung) handeln. Es ist grundsätzlich auch denkbar, dass die Unterdruckerzeugungseinrichtung im abgekoppelten Zustand des Endeffektors über eine Versorgungsleitung mit Betriebsfluid (insbesondere Druckluft) oder elektrischer Energie versorgt wird.

Es ist auch denkbar, dass die Hilfsunterdruckversorgungseinrichtung einen Unterdruckspeicher zur (autarken) Versorgung der Unterdruckgreifvorrichtung mit Unterdruck umfasst. Der Unterdruckspeicher kann insbesondere dimensioniert sein, um eine Leckage zwischen Unterdruckerzeugungsvorrichtung und Greifobjekt im abgekoppelten Zustand des Endeffektors zu kompensieren.

Im Rahmen einer alternativen vorteilhaften Weiterbildung kann die Unterdruckgreifvorrichtung des Endeffektors im angekoppelten Zustand und im abgekoppelten Zustand über die gleiche Unterdruckversorgung mit Unterdruck versorgt werden.

Dies kann beispielhaft dadurch realisiert sein, dass der Endeffektor im angekoppelten Zustand über eine Fluidleitung mit Unter- oder Überdruck versorgt wird, wobei die Fluidleitung im abgekoppelten Zustand des Endeffektors mit dem Endeffektor verbunden bleibt, also eine Verbindung zwischen Fluidleitung und Endeffektor beim Abkoppeln des Endeffektors bzw. Ablegen des Greifobjekts nicht getrennt wird. Insofern kann der Endeffektor sowohl im angekoppelten Zustand als auch im abgekoppelten Zustand über dieselbe Fluidleitung mit Unter- oder Überdruck versorgt werden. Eine solche Ausgestaltung ermöglicht es auf konstruktiv einfache und energieeffiziente Weise den Endeffektor mit zum Energie zu versorgen. Die Handhabungsanlage kann insofern eine mit dem Endeffektor verbundene Fluidleitung zur Versorgung der Unterdruckgreifvorrichtung mit Unter- oder Überdruck aufweisen. Die Fluidleitung ist insbesondere von dem Manipulator bewegungsgetrennt.

Wie vorstehend erwähnt, kann der Endeffektor mehrere, insbesondere unterschiedliche, Greifvorrichtungen aufweisen. Im Rahmen einer vorteilhaften Weiterbildung kann der Endeffektor eine Unterdruckgreifvorrichtung, insbesondere Sauggreifer, und zusätzlich eine Hilfsgreifvorrichtung aufweisen. Bei einer solchen Ausgestaltung kann insbesondere vorgesehen sein, dass das Greifobjekt im abgekoppelten Zustand des Endeffektors, also nach dem Abkoppeln des Endeffektors von dem Manipulator, durch die Hilfsgreifvorrichtung gegriffen wird. Dies kann alternativ oder zusätzlich zu einer durch die Unterdruckgreifvorrichtung bereitgestellten Greifwirkung erfolgen. Insofern ist es denkbar, dass im abgekoppelten Zustand des Endeffektors das Greifobjekt (zumindest für ein gewisses Zeitintervall) ausschließlich durch die Hilfsgreifvorrichtung gegriffen wird. Es ist auch denkbar, dass im abgekoppelten Zustand des Endeffektors das Greifobjekt (zumindest für ein gewisses Zeitintervall) sowohl von der Unterdruckgreifvorrichtung als auch von der Hilfsgreifvorrichtung gegriffen wird. Die Hilfsgreifvorrichtung kann beim Greifen des Greifobjekts und insbesondere beim Verlagern des Greifobjekts durch den Manipulator aktiviert sein. Die Hilfsgreifvorrichtung kann auch erst beim oder nach dem Abkoppeln des Endeffektors aktiviert werden. Beispielsweise ist es denkbar, dass die Hilfsgreifvorrichtung erst bei Unter- oder Überschreiten eines Druckniveaus in der Unterdruckgreifvorrichtung aktiviert wird. Eine Ausgestaltung mit Hilfsgreifvorrichtung ermöglicht es, auch im abgekoppelten Zustand eine Greifwirkung zuverlässig aufrechtzuerhalten. Beispielsweise kann durch die Hilfsgreifvorrichtung ein möglicher Greifkraftverlust der Unterdruckgreifvorrichtung im abgekoppelten Zustand (z.B. in Folge einer Leckage zwischen Unterdruckgreifvorrichtung und Greifobjekt) kompensiert werden.

Besonders vorteilhaft ist es, wenn die Hilfsgreifvorrichtung als Passivgreifvorrichtung ausgebildet ist, also insbesondere ohne Zufuhr von Betriebsenergie eine Greifwirkung auf das Greifobjekt ausübt. Insbesondere kann die Hilfsgreifvorrichtung eine mechanische oder magnetische Greifvorrichtung sein. Insofern kann der Endeffektor eine Unterdruckgreifvorrichtung und eine magnetische Greifvorrichtung umfassen. Alternativ kann der Endeffektor eine Unterdruckgreifvorrichtung und eine mechanische Greifvorrichtung umfassen.

Die vorstehend genannte Aufgabe wird auch durch eine Handhabungsanlage gelöst, welche zum Ausführen des vorstehend beschriebenen Verfahrens eingerichtet ist. Die Handhabungsanlage umfasst einen Manipulator, insbesondere Roboter, einen Endeffektor zum Greifen eines Greifobjekts und eine Kopplungseinrichtung zum wiederholten An- und Abkoppeln des Endeffektors an den Manipulator. Die vorstehend in Bezug auf das Verfahren beschriebenen Vorteile und optionalen Merkmale können auch zur Ausgestaltung der Handhabungsanlage dienen, sodass zur Vermeidung von Wiederholungen auf vorstehende Offenbarung hierzu verwiesen wird.

Die Handhabungsanlage umfasst vorzugsweise außerdem eine Steuereinrichtung zum Ansteuern des Manipulators und insbesondere der Kopplungseinrichtung. Die Steuereinrichtung ist insbesondere dazu eingerichtet, eines der vorstehend beschriebenen Verfahren durchzuführen. Insbesondere weist die Steuereinrichtung eine nicht-flüchtige Datenspeichereinrichtung auf, auf welcher Steuereinweisungen hinterlegt, insbesondere gespeichert, sind, welche, insbesondere bei Ausführung durch eine Datenverarbeitungsanlage der Steuereinrichtung, die Steuereinrichtung dazu veranlassen, eines der vorstehend beschriebenen Verfahren durchzuführen.

Im Rahmen einer vorteilhaften Weiterbildung kann der Endeffektor einen Energiespeicher zur Versorgung des Endeffektors mit Betriebsenergie aufweisen. Der Energiespeicher kann insbesondere zum autarken Betreiben des Endeffektors ausgebildet sein. Der Energiespeicher kann beispielsweise ein Druckspeicher oder eine Batterie sein.

Im Rahmen einer vorteilhaften Weiterbildung kann der Endeffektor eine Unterdruckgreifvorrichtung, insbesondere Sauggreifer, umfassen.

Im Rahmen einer vorteilhaften Weiterbildung kann der Endeffektor eine Hilfsunterdruckversorgungseinrichtung umfassen. Die Hilfsunterdruckversorgungseinrichtung ist insbesondere zur autarken Erzeugung und/oder Bereitstellung von Unterdruck ausgebildet.

Im Rahmen einer vorteilhaften Weiterbildung kann die Hilfsunterdruckversorgungseinrichtung eine Unterdruckerzeugungseinrichtung umfassen. Dabei kann es sich beispielsweise um einen pneumatischen Ejektor, eine elektrische Pumpe oder einen Unterdruckspeicher mit einer Pumpe handeln. In vorteilhafter Weise kann die Hilfsunterdruckversorgungseinrichtung einen Energiespeicher zum Betreiben der Unterdruckerzeugungseinrichtung aufweisen.

Im Rahmen einer vorteilhaften Ausgestaltung kann die Hilfsunterdruckversorgungseinrichtung eine elektrisch betriebene Unterdruckerzeugungseinrichtung und einen Stromspeicher, insbesondere Batterie, zum autarken Betreiben der Unterdruckerzeugungseinrichtung umfassen. Im Rahmen einer alternativen vorteilhaften Ausgestaltung kann die Hilfsunterdruckversorgungseinrichtung eine pneumatisch betriebene Unterdruckerzeugungseinrichtung und einen Druckspeicher, insbesondere Druckluftspeicher, zum autarken Betreiben der Unterdruckerzeugungseinrichtung umfassen.

Die vorstehend in Bezug auf das Verfahren beschriebenen Vorteile und optionalen Merkmale der Hilfsunterdruckerzeugungseinrichtung können - insbesondere losgelöst von einem konkreten Verfahren - auch zur Ausgestaltung der Handhabungsanlage dienen.

Die Erfindung betrifft auch einen Endeffektor zur Verwendung in einer vorstehend beschriebenen Handhabungsanlage. Die vorstehend in Bezug auf die Handhabungsanlage beschriebenen Vorteile und optionalen Merkmale können zur Ausgestaltung des Endeffektors dienen.

Die Erfindung wird im Folgenden anhand der Figuren näher erläutert.

Es zeigen:
Fig. 1 vereinfachte schematische Darstellung einer Ausgestaltung einer Handhabungsanlage;
Fig. 2 Flussdiagramm zur Erläuterung eines beispielhaften Verfahrens zum Handhaben eines Greifobjekts mit der Handhabungsanlage gemäß Fig. 1; und
Fig. 3-6 vereinfachte schematische Darstellungen verschiedener Ausgestaltungen eines Endeffektors.

In der nachfolgenden Beschreibung sowie in den Figuren sind für identische oder einander entsprechende Merkmale jeweils dieselben Bezugszeichen verwendet.

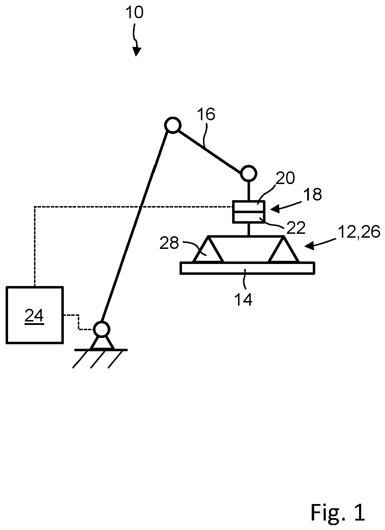

Die Figur 1 zeigt in vereinfachter schematischer Darstellung eine beispielhafte Ausgestaltung einer Handhabungsanlage, welche insgesamt mit dem Bezugszeichen 10 bezeichnet ist.

Die Handhabungsanlage 10 umfasst einen Endeffektor 12 zum Greifen eines Greifobjekts 14 und einen Manipulator 16 zum Verlagern des Endeffektors 12.

Der Endeffektor 12 ist über eine Kopplungseinrichtung 18 mit dem Manipulator 16 verbunden. Die Kopplungseinrichtung 18 ist dazu ausgebildet, den Endeffektor 12, insbesondere automatisiert, wiederholbar anzukoppeln, abzukoppeln und wieder anzukoppeln. Wie in Figur 1 schematisch gezeigt, weist die Kopplungseinrichtung 18 im Beispiel einen Manipulatorseitigen Kopplungsabschnitt 20 und einen Endeffektor-seitigen Kopplungsabschnitt 22 auf. Der Manipulator-seitige Kopplungsabschnitt 20 und der Endeffektor-seitige Kopplungsabschnitt 22 sind insbesondere über eine wiederholbar, insbesondere automatisiert, schießbare, lösbare und wieder schließbare Verbindungseinrichtung miteinander verbindbar. Beispielhaft kann die Kopplungseinrichtung 18 als Schnellkupplung ausgebildet sein.

Die Handhabungsanlage 10 umfasst außerdem eine Steuereinrichtung 24, welche dazu ausgebildet ist, den Manipulator 16 anzusteuern. Die Steuereinrichtung 24 ist insbesondere auch dazu ausgebildet, die Kopplungseinrichtung 18 anzusteuern. Die Steuereinrichtung 24 kann auch dazu ausgebildet sein, den Endeffektor 12 anzusteuern. Wie vorstehend erwähnt, umfasst die Steuereinrichtung 24 vorzugsweise eine nicht-flüchtige Datenspeichereinrichtung (nicht dargestellt), auf welcher Steueranweisungen für die Steuereinrichtung 24 hinterlegt sind.

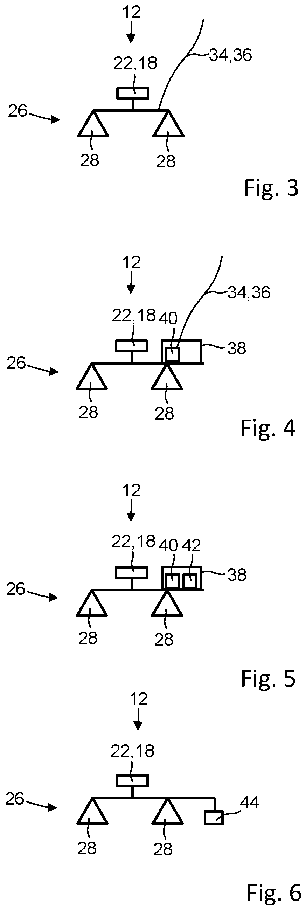

Im Beispiel gemäß Figur 1 ist der Endeffektor 12 als Unterdruckgreifvorrichtung 26 ausgebildet, im Konkreten als Sauggreifer mit einer Mehrzahl von Saugkörpern 28. Wie vorstehend erwähnt, ist die Erfindung aber nicht auf eine Ausgestaltung des Endeffektors 12 als Unterdruckgreifvorrichtung 26 beschränkt. Bei nicht dargestellten Ausgestaltungen kann der Endeffektor 12 auch beliebige andere Greifvorrichtungen (bspw. magnetische, mechanische oder passive) aufweisen. Weitere beispielhafte Ausgestaltungen des Endeffektors 12 werden nachfolgend unter Bezugnahme auf die Figuren 3 bis 6 erläutert.

Der Manipulator 16 ist vorzugsweise als Roboter ausgebildet. Beispielsweise kann der Manipulator 16 ein 6-Achs-Roboter sein. Es ist auch möglich, dass der Manipulator 16 lediglich eine angetriebene Achse, bspw. Linearachse, aufweist.

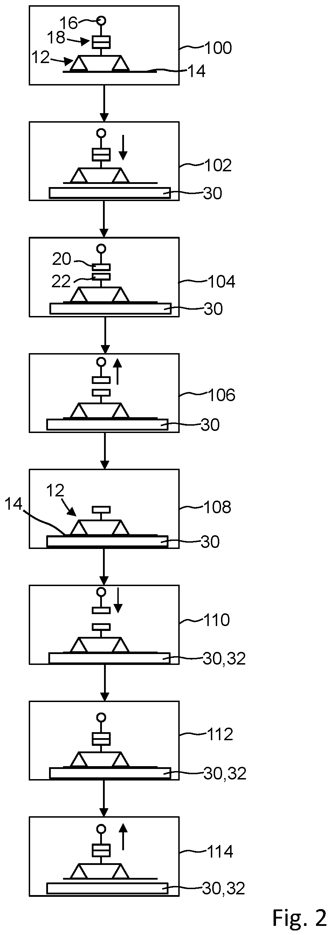

Im Folgenden wird unter Bezugnahme auf die Figur 2 ein beispielhaftes Verfahren zum Handhaben eines Greifobjekts 12 mittels der Handhabungsanlage 10 beschrieben. Das Verfahren ist aber nicht auf die konkrete Ausgestaltung der Handhabungsanlage 10 gemäß Figur 1 beschränkt.

In einem Ausgangszustand (Block 100 in Figur 2) ist der Endeffektor 12 mittels der Kopplungseinrichtung 18 an den Manipulator 16 angekoppelt (angekoppelter Zustand) und ein Greifobjekt 14 ist von dem Endeffektor 12 gehalten. Hierzu kann der Endeffektor 12 zuvor mittels des Manipulators 16 auf das Greifobjekt 14 aufgesetzt und sodann das Greifobjekt 14 mit dem Endeffektor 12 gegriffen worden sein (in Fig. 2 nicht gesondert dargestellt).

In einem weiteren Schritt (Block 102 in Figur 2) wird der Endeffektor 12 und das damit gegriffene Greifobjekt 14 mittels des Manipulators 16 zu einem gewünschten Ablageort 30, beispielsweise einem Lagerort oder eine Bearbeitungsstation einer Bearbeitungsmaschine, verlagert und dort abgesetzt.

Sodann wird der Endeffektor 12 mittels der Kopplungseinrichtung 18 von dem Manipulator 16 abgekoppelt (Block 104 in Figur 2). Wie in Block 106 in Figur 2 angedeutet kann der Manipulator 16 nun optional von dem Ablageort 30 wegfahren, bspw. um einen weiteren Endeffektor 12 anzukoppeln.

Der Endeffektor 12 verbleibt gemeinsam mit dem Greifobjekt 14 am Ablageort 30 (vgl. Block 108 in Figur 2).

Vorzugsweise wird auch im abgekoppelten Zustand des Endeffektors 12 eine Greifwirkung des Endeffektors 12 aufrechterhalten; das Greifobjekt 14 wird also weiterhin von dem Endeffektor 12 gegriffen (nachfolgend noch im Detail erläutert). Es ist aber auch denkbar, dass der Endeffektor 12 im abgekoppelten Zustand lediglich auf das Greifobjekt 14 aufgesetzt ist.

Soll das Greifobjekt 14 wieder aufgenommen werden, wird der Manipulator 16 erneut an den Lagerort gefahren (Block 110 in Figur 2) und der Endeffektor 12 erneut mittels der Kopplungseinrichtung 18 an den Manipulator 16 angekoppelt (Block 112 in Figur 2).

Der Endeffektor 12 (und das damit gehaltene Greifobjekt 14) können dann von dem Manipulator 16 verlagert werden (Block 114 in Figur 2), beispielsweise zu einem weiteren Lagerort oder zu einer Bearbeitungsmaschine.

Bei dem vorstehend beispielhaft skizzierten Verfahren sind der Ablageort 30, an welchem das Greifobjekt 14 abgelegt wird, und der Aufnahmeort, an welchem das Greifobjekt 14 wieder gegriffen wird (also der Endeffektor 12 wieder an den Manipulator 16 angekoppelt wird), identisch. Der Ablageort 30 ist also gleichzeitig ein Aufnahmeort 32.

Wie vorstehend erwähnt, kann der Aufnahmeort 32 aber auch von dem Ablageort 30 verschieden sein. Beispielsweise ist es denkbar, dass der Ablageort 30 ein Zufuhrort einer Bearbeitungsmaschine ist und das Greifobjekt 14 nach dem Ablegen an diesem Zufuhrort einem Bearbeitungsprozess unterzogen wird (also in Figur 2 zwischen den Schritten 108 und 110) im Zuge dessen das Greifobjekt 14 an einen von dem Ablageort 30 verschiedenen Aufnahmeort 32 (bspw. einem Ausgabeort der Bearbeitungsmaschine) verbracht wird.

Wie vorstehend erwähnt, ist es vorteilhaft, wenn der Endeffektor 12 auch im abgekoppelten Zustand eine Greifwirkung auf das Greifobjekt 14 ausübt.

Bei der beispielhaften Ausgestaltung des Endeffektors 12 als Unterdruckgreifvorrichtung 26 kann es jedoch durch Druckverluste, bspw. aufgrund von Leckage zwischen einer Dichtlippe der Unterdruckgreifvorrichtung 26 und dem Greifobjekt 14, zu einer Verringerung der Greifkraft, bis hin zu einem Verlust der Greifkraft kommen.

Um dem entgegenzuwirken, ist es denkbar, dass der Endeffektor 12 sowohl im angekoppelten Zustand als auch im abgekoppelten Zustand mit einer Versorgungsleitung 34 verbunden ist, über welche die Unterdruckgreifvorrichtung 26 mit Betriebsenergie (z.B. elektrischer Energie oder Betriebsfluid, insbesondere Unterdruck oder Überdruck) versorgbar ist (vgl. Figur 3). Die Versorgungsleitung 34 wird also beim Abkoppeln des Endeffektors 12 von dem Manipulator 16 nicht mit abgekoppelt.

In dem dargestellten Beispiel ist die Versorgungsleitung 34 als Fluidleitung 36 zur Versorgung der Unterdruckgreifvorrichtung 26 mit Unterdruck ausgebildet. Die Fluidleitung 36 ist insbesondere mit einer externen, also von dem Endeffektor 12 getrennten, Unterdruckerzeugungseinrichtung strömungsverbunden.

Es ist auch möglich, dass der Endeffektor 12 eine Hilfsunterdruckversorgungseinrichtung 38 umfasst, welche dazu ausgebildet ist, den Endeffektor 12 im abgekoppelten Zustand mit Unterdruck zu versorgen (vgl. Fig. 4). Die Hilfsunterdruckversorgungseinrichtung 38 kann insbesondere eine Unterdruckerzeugungseinrichtung 40 aufweisen.

Wie in Figur 4 beispielhaft dargestellt, kann die Unterdruckerzeugungseinrichtung 40 über eine Versorgungsleitung 34 mit Betriebsenergie versorgbar sein. Beispielswiese kann die Unterdruckerzeugungseinrichtung 40 als pneumatischer Ejektor zur Erzeugung von Unterdruck aus Überdruck ausgebildet sein. Dann kann es sich bei der Versorgungsleitung 34 um eine Fluidleitung 36 zur Versorgung der Unterdruckerzeugungseinrichtung 40 mit Druckluft (bspw. über eine externe Druckluftversorgung) handeln. Es ist auch denkbar, dass die Unterdruckerzeugungseinrichtung 40 als elektrisch betriebene Pumpe ausgebildet ist. Dann kann es sich bei der Versorgungsleitung 34 um eine elektrische Versorgungsleitung (Stromleitung) handeln.

Die Figur 5 zeigt eine weitere beispielhafte Ausgestaltung, bei der die Hilfsunterdruckversorgungseinrichtung 38 einen Energiespeicher 42 zur autarken Versorgung der Unterdruckerzeugungseinrichtung 40 mit Betriebsenergie aufweist. Bei einer Ausgestaltung der Unterdruckerzeugungseinrichtung 40 als pneumatischer Ejektor kann es sich bei dem Energiespeicher 42 beispielsweise um einen Druckluftspeicher handeln. Bei einer Ausgestaltung der Unterdruckerzeugungseinrichtung 40 als elektrisch betriebene Pumpe kann es sich bei dem Energiespeicher 42 beispielsweise um eine Batterie handeln.

Die Figur 6 zeigt eine weitere beispielhafte Ausgestaltung eines Endeffektors 12, welcher zusätzlich zu der Unterdruckgreifvorrichtung 26 eine Hilfsgreifvorrichtung 44 aufweist. Die Hilfsgreifvorrichtung 44 ist dazu ausgebildet, das Greifobjekt 14 - zusätzlich oder alternativ zu der Unterdruckgreifvorrichtung 26 - zu greifen, insbesondere im abgekoppelten Zustand des Endeffektors 12.

Vorzugsweise handelt es sich bei der Hilfsgreifvorrichtung 44 um eine passive Greifvorrichtung, insbesondere mechanische oder magnetische Greifvorrichtung. Die Hilfsgreifvorrichtung 44 kann insbesondere nach dem Abkoppeln des Endeffektors 12 von dem Manipulator 16 (Schritt 104 in Figur 2) aktiviert werden. Dies kann unmittelbar beim Abkoppeln erfolgen oder bspw. erst bei Unter- oder Überschreiten eines vorgegebenen Druckniveaus in der Unterdruckgreifvorrichtung 26 (z.B. bei Überschreiten eines kritischen Unterdrucks, bei welchem ein zuverlässiges Greifen des Greifobjekts 14 durch die Unterdruckgreifvorrichtung 26 nicht mehr gewährleistet ist).

## Patentansprüche

1. Verfahren zum Handhaben eines Greifobjekts (14) mittels einer Handhabungsanlage (10) umfassend einen Endeffektor (12) zum Greifen des Greifobjekts (14), einen Manipulator (16) zum Verlagern des Endeffektors (12) und eine Kopplungseinrichtung (18) zum, insbesondere automatisierten, An- und Abkoppeln des Endeffektors (12) an den Manipulator (16), das Verfahren umfassend:
- Greifen des Greifobjekts (14) mittels des Endeffektors (12) ;
- Ablegen des Greifobjekts (14) an einem Ablageort (30);
- Aufnehmen des Greifobjekts (14) von einem Aufnahmeort (32),
**dadurch gekennzeichnet, dass**
zum Ablegen des Greifobjekts (14) der Endeffektor (12) von dem Manipulator (16) abgekoppelt wird, sodass der Endeffektor (12) an dem Greifobjekt (14) verbleibt, und dass zum Aufnehmen des Greifobjekts (14) von dem Aufnahmeort (32) der an dem Greifobjekt (14) verbliebene Endeffektors (12) wieder an den Manipulator (16) angekoppelt wird.

2. Verfahren nach Anspruch 1, wobei zwischen dem Ablegen des Greifobjekts (14) und dem Aufnehmen des Greifobjekts (14) das Greifobjekt (14) weiterhin von dem Endeffektor (12) gegriffen wird.

3. Verfahren nach Anspruch 1 oder 2, wobei der Endeffektor (12) im angekoppelten Zustand mit einer Versorgungsleitung (34) zur Versorgung des Endeffektors (12) mit Betriebsenergie verbunden ist, wobei die Versorgungsleitung im abgekoppelten Zustand des Endeffektors (12) mit dem Endeffektor (12) verbunden bleibt.

4. Verfahren nach einem der vorherigen Ansprüche, wobei der Endeffektor (12) im angekoppelten Zustand über eine primäre Energieversorgung mit Betriebsenergie versorgt wird und wobei der Endeffektor (12) im abgekoppelten Zustand über eine sekundäre, insbesondere autarke, Hilfsenergieversorgung mit Betriebsenergie versorgt wird.

5. Verfahren nach einem der vorherigen Ansprüche, wobei der Endeffektor (12) einen Energiespeicher (42) zum autarken Betreiben des Endeffektors (12) umfasst.

6. Verfahren nach einem der vorherigen Ansprüche, wobei der Endeffektor (12) eine Unterdruckgreifvorrichtung (26), insbesondere Sauggreifer, umfasst.

7. Verfahren nach dem vorherigen Anspruch, wobei die Unterdruckgreifvorrichtung (26) im angekoppelten Zustand von einer primären Unterdruckversorgung mit Unterdruck versorgt wird, wobei der Endeffektor (12) eine Hilfsunterdruckversorgungseinrichtung (38) aufweist, wobei der Endeffektor (12) im abgekoppelten Zustand, von der Hilfsunterdruckversorgungseinrichtung (38) mit Unterdruck versorgt wird.

8. Verfahren nach einem der Ansprüche 6 oder 7, wobei der Endeffektor (12) zusätzlich zu der Unterdruckgreifvorrichtung (26) eine Hilfsgreifvorrichtung (44), insbesondere mechanische oder magnetische Greifvorrichtung, aufweist, wobei das Greifobjekt (14) im abgekoppelten Zustand durch die Hilfsgreifvorrichtung (44) gegriffen wird, insbesondere wobei im angekoppelten Zustand des Endeffektors (12) das Greifobjekt (14), insbesondere ausschließlich, durch die Unterdruckgreifvorrichtung (26) gegriffen wird.

9. Handhabungsanlage (10) zum Ausführen des Verfahrens nach einem der vorherigen Ansprüche, umfassend
- einen Endeffektor (12) zum Greifen eines Greifobjekts (14),
- einen Manipulator (16) zum Verlagern des Endeffektors (12),
- eine Kopplungseinrichtung (18) zum, insbesondere automatisierten, An- und Abkoppeln des Endeffektors (12) an den Manipulator (16),
- eine mit dem Manipulator (16) und der Kopplungseinrichtung (18) zusammenwirkende Steuereinrichtung (24), welche dazu ausgebildet ist, das Verfahren nach einem der vorherigen Ansprüche auszuführen.

10. Handhabungsanlage (10) nach dem vorherigen Anspruch, wobei der Endeffektor (12) einen Energiespeicher (42) zum autarken Betreiben des Endeffektors (12) aufweist.

11. Handhabungsanlage (10) nach Anspruch 9 oder 10, wobei der Endeffektor (12) eine Unterdruckgreifvorrichtung (26), insbesondere Sauggreifer, umfasst.

12. Handhabungsanlage (10) nach dem vorherigen Anspruch, wobei der Endeffektor (12) eine Hilfsunterdruckversorgungseinrichtung (38) zur, insbesondere autarken, Erzeugung und/oder Bereitstellung von Unterdruck aufweist.

13. Handhabungsanlage (10) nach dem vorherigen Anspruch wobei die Hilfsunterdruckversorgungseinrichtung (38) eine elektrisch betriebene Unterdruckerzeugungseinrichtung (40) umfasst, wobei die Hilfsunterdruckversorgungseinrichtung (38) eine Batterie zum Betreiben der Unterdruckerzeugungseinrichtung (40) umfasst.

14. Handhabungsanlage (10) nach einem der Ansprüche 11 bis 13, wobei der Endeffektor (12) zusätzlich zu der Unterdruckgreifvorrichtung (26) eine Hilfsgreifvorrichtung (44) zum Greifen des Greifobjekts (14) aufweist, insbesondere eine mechanische oder magnetische Greifvorrichtung.
